Europäisches Patentamt

(19) **European Patent Office**

Office européen des brevets

(11) Veröffentlichungsnummer: **0 025 855**
**B1**

(12) **EUROPÄISCHE PATENTSCHRIFT**

(45) Veröffentlichungstag der Patentschrift:
28.12.88

(51) Int. Cl.⁴: **G 06 F 9/30**

(21) Anmeldenummer: **80104761.4**

(22) Anmeldetag: **12.08.80**

(54) Steuereinrichtung in einer elektronischen Datenverarbeitungsanlage für die Durchführung erzwungener Operationen.

(30) Priorität: **19.09.79 DE 2937777**

(43) Veröffentlichungstag der Anmeldung:
**01.04.81 Patentblatt 81/13**

(45) Bekanntmachung des Hinweises auf die Patenterteilung:
**28.12.88 Patentblatt 88/52**

(84) Benannte Vertragsstaaten:
**DE FR GB IT**

(56) Entgegenhaltungen:
**GB-A- 952 057**

**IBM TECHNICAL DISCLOSURE BULLETIN, Band 18, Nr. 7, Dezember 1975, Seiten 2250-2252 New York, U.S.A. R.L. BAINS et al.: "Instruction set extension", Seite 2251, Zeilen 1-5**

(73) Patentinhaber: **International Business Machines Corporation, Old Orchard Road, Armonk, N.Y. 10504 (US)**

(72) Erfinder: **Bazlen, Dieter, Dr., Traubergstrasse 13, D-7000 Stuttgart 1 (DE)**
Erfinder: **Bock, Dietrich, Herdlauchring 5, D-7036 Schönaich (DE)**
Erfinder: **Getzlaff, Klaus J., Breitensteiner Strasse 5-6, D-7030 Böblingen (DE)**
Erfinder: **Hajdu, Johann, Bergamastrasse 77, D-7030 Böblingen (DE)**
Erfinder: **Painke, Helmut, Panoramastrasse 38, D-7030 Böblingen (DE)**

(74) Vertreter: **Jost, Ottokarl, Dipl.-Ing., Schönaicher Strasse 220, D-7030 Böblingen (DE)**

**Beschreibung**

Die Erfindung betrifft eine Einrichtung im Steuerwerk einer elektronischen Datenverarbeitungsanlage für die Steuerung von durch bestimmte Bedingungen erzwungenen Operationen, mit einem Befehlsregister, einem Befehlstaktgeber sowie einem Operationsdekodierer.

Im internen Ablauf der Programme von elektronischen Datenverarbeitungsanlagen ist es bei bestimmten Zuständen erforderlich, die Ausführung eines laufenden Befehls zu verzögern, beispielsweise durch das Einfügen von Wartezyklen.

Andererseits besteht die Notwendigkeit, die Befehlsausführung zu unterbrechen, um bestimmte Zyklen einzuschieben, wie z. B. bei Kanalzugriffen auf den gemeinsamen Speicher der Datenverarbeitungsanlage, beim Nachladen eines Datenzwischenspeichers oder eines Befehlspuffers oder dgl.

In allen diesen Fällen ist es notwendig, dass das Steuerwerk den zur Ausführung anstehenden Befehl ignoriert und stattdessen eine andere erzwungene Operation ausführt.

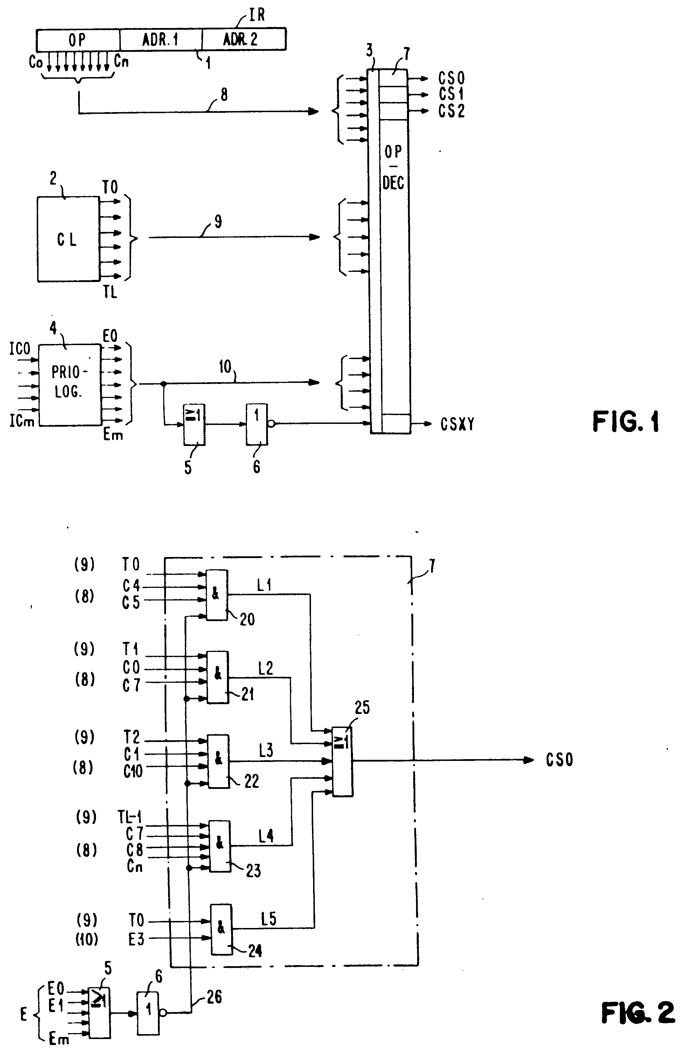

Steuerwerke bekannter Datenverarbeitungsanlagen z. B. IBM System/370 Modell 115 haben im allgemeinen einen Aufbau, wie ihn Fig. 1 zeigt. Sie bestehen, neben anderen wichtigen, in Fig. 1 nicht dargestellten Aggregaten, wie beispielsweise Steuerspeicher und Datenfluss-Steuertoren, aus einem Befehlsregister (IR) 1, einem Taktgeber (CL) 2, einem Operationsdecodierer (OP-DEC) 3 sowie einer Prioritätslogikschaltung (PRIO-LOG) 4, welche die anstehenden, eine Unterbrechung erfordernden internen oder externen Maschinenbedingungen IC0 bis ICm entsprechend ihrem Prioritätsrang ordnet und die Bits E0 bis Em einer durch die genannten Bedingungen erzwungenen Operation erzeugt.

Im Operationsdecodierer 3 werden die Bits C0 bis Cn des Operationscodes OP, die Taktsignale, welche die Zykluszeiten T0 bis TL eines Befehls variabler Länge repräsentieren sowie die Bits E0 bis Em von erzwungenen Operationen kombiniert und zu den Datenfluss steuernden Steursignalen CS0 bis CSxy decodiert.

Einen Ausschnitt 7 des Operationsdecodierers 3, und zwar denjenigen, der das Steursignal CS0 für bestimmte Teile des Datenflusses erzeugt, ist in Fig. 2 ausführlicher dargestellt. Für die Erzeugung der übrigen Steursignale CS1 bis CSxy sind dem in Fig. 2 dargestellten Ausschnitt 7 ähnliche Ausschnitte vorgesehen. Das Steursignal CS0 entsteht als Ausgangssignal eines ODER-Tores 25 mit fünf Eingängen, von denen jeder über eine Leitung L1 bis L5 mit dem Ausgang eines UND-Tores 20 bis 24 verbunden ist. An den Eingängen dieser UND-Tore liegen bestimmte Taktsignale, genauer gesagt, die den Instruktionszykluszeiten T0 bis TL entsprechenden Zeitsteuersignale, die über das Kabel 9 (in Fig. 2 in Klammern dargestellt) übertragen werden. Ausserdem liegen an den Eingängen der UND-Tore 20 bis 23 bestimmte Bits Ci des Operationscodes OP an. Am UND-Tor 24 liegen anstelle der Bits Ci ein oder mehrere Bits Ei der erzwungen auszuführenden Operation.

Bei der Ausführung einer erzwungenen Operation müssen alle UND-Tore 20 bis 23, an denen Bits Ci des Operationscodes anliegen, gesperrt werden. Stattdessen wird das Steuersignal CS1 von den UND-Toren, beispielsweise dem UND-Tor 24 erzeugt, an deren Eingängen die Bits Ei der erzwungenen Operation anliegen.

Zu diesem Zweck haben die UND-Tore 20 bis 23 einen weiteren Eingang, der mit dem Ausgang einer Sperrschaltung, bestehend aus einem ODER-Tor 5 und einem nachgeschalteten Inverter 6, verbunden ist. An den Eingängen des ODER-Tores 5 liegen die Bits E0 bis Em der erzwungenen Operationen. Liegt keines dieser Bits Ei an, dann liefert der Ausgang des Inverters 6 ein Durchschaltesignal für die genannten UND-Tore. Erst wenn eines oder mehrere der Bits E0 bis Em der erzwungenen Operation am ODER-Tor 5 anliegen, dann erzeugt der Ausgang des Inverters 6 ein Sperrsignal für die genannten UND-Tore.

Wie die Fign. 1 und 2 erkennen lassen, müssen in allen xy + 1 Teilelementen 7 des Operationsdecodierers 3 diejenigen UND-Tore, welche die Instruktionszykluszeiten Ti mit den Bits Ci des Operationscodes OP kombinieren, über einen zusätzlichen Sperreingang und eine zusätzliche Verdrahtung zu der Sperrschaltung 5, 6 verfügen. Ausserdem ist die Ausgangsbelastung des Inverters 6 bei der Vielzahl der für die Bildung der Steuersignale CSxy erforderlichen UND-Tore extrem hoch, so dass ggf. mehrere solcher Sperrschaltungen vorgesehen werden müssen.

Eine derartige Schaltkreisstruktur ist somit hinsichtlich ihres Herstellungs- und Komponentenaufwandes sowie ihrer Fehlersicherheit nachteilig.

Es ist daher die Aufgabe der vorliegenden Erfindung, für das Steuerwerk einer elektronischen Datenverarbeitungsanlage eine Einrichtung zur Steuerung erzwungener Operationen anzugeben, die weniger Systemkomponenten und eine weniger aufwendige Verdrahtung erfordert und die auch somit weniger Störungen unterworfen ist.

Gelöst wird diese Aufgabe der Erfindung durch die im Hauptanspruch angegebenen Merkmale.

Vorteilhafte Ausgestaltungen und Weiterbildungen des Gegenstandes der Erfindung sind dem abhängigen Anspruch zu entnehmen.

Durch die Erfindung wird somit der Vorteil erzielt, dass Steuerwerke elektronischer Datenverarbeitungsanlagen hinsichtlich der Durchführung von durch bestimmte Bedingungen erzwungenen Operationen einfacher gestaltet werden können. Sie benötigen weniger Schaltkreise und eine weniger komplexe Verdrahtung, wodurch sie auch sicherer gegen Fehler sind.

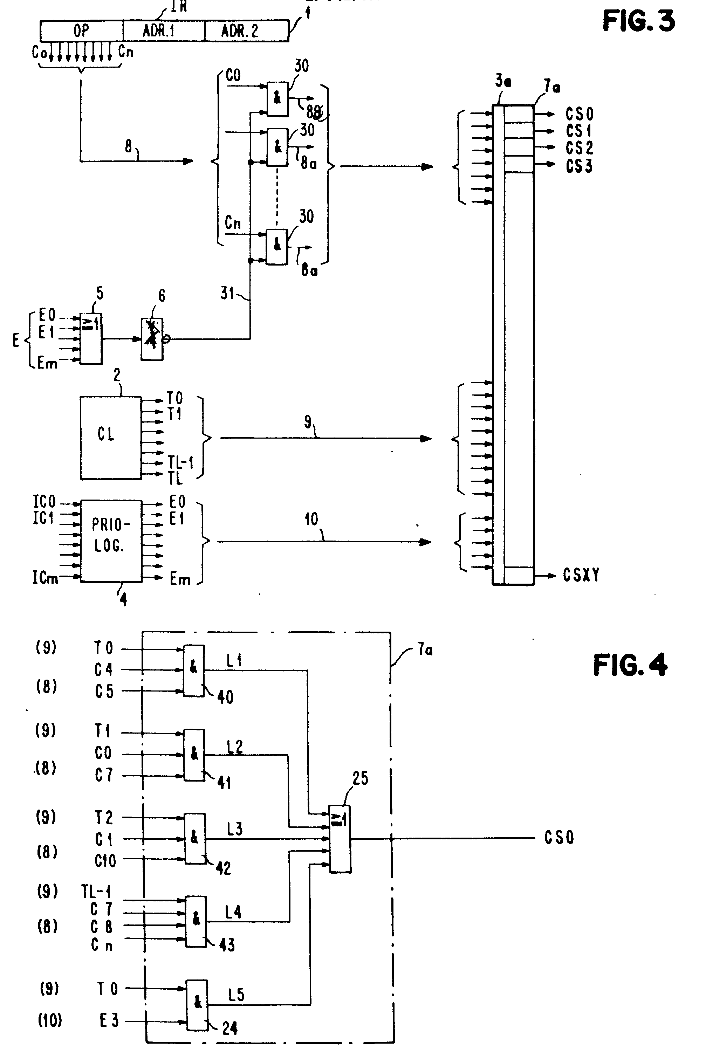

Im folgenden wird ein Ausführungsbeispiel der Erfindung anhand der Fig. 3 und 4 erläutert, die in schematischer Darstellung die neue Steuereinrichtung für die Durchführung erzwungener Operationen zeigen.

Die Fign. 1 und 2 zeigen schematische Darstellungen einer Steuereinrichtung einer bekannten Datenverarbeitungsanlage für die Durchführung von erzwungenen Operationen.

In den Befehlssätzen fast aller elektronischen Datenverarbeitungsanlagen ist ein Leerbefehl (NOP) vorgesehen, der einen bestimmten Operationscode OP hat, der in seiner einfachsten Form aus lauter Nullen besteht, d. h., dessen Bits C0 bis Cn den der binären Null entsprechenden Zustand aufweisen. Ein solcher Leerbefehl hat die Wirkung, dass seine Decodierung im Operationsdecodierer 3a keine bzw. nur der binären Null entsprechende Steuersignale CS0 bis CSxy erzeugt.

Wenn also bei Auftreten einer, eine erzwungene Operation fordernden Bedingung die Bits des Operationscodes auf den Operationscode eines Leerbefehls eingestellt werden können, dann ist auch die Erzeugung von Steuersignalen durch die Decodierung der Bits E0 bis Em einer erzwungenen Operation in einfacher Weise durchzuführen, da nun der Operationsdecodierer 3a ausschliesslich diese Bits Ei einer erzwungenen Operation zu decodieren hat, da die Bits Ci (alle Null), des Operationscodes eines NOP-Befehls für die Bildung der Steuersignale CS0 bis CSxy keinen Beitrag liefern.

Eine Schaltungsanordnung, die bei einem beliebigen Operationscode OP eines im Befehlsregister (IR) 1 befindlichen Befehls die Codekombination des Operationscodes des Leerbefehls NOP erzwungenermassen einstellt, besteht, wie Fig. 3 zeigt, aus dem schon erwähnten Sperrschalter 5, 6 sowie einem Satz von n UND-Toren 30, mit jeweils zwei Eingängen, von denen jeweils ein Eingang mit dem Ausgang des Inverters 6 verbunden ist. Der andere Eingang führt zu einer bestimmten Bitposition des Operationscodefeldes im Befehlsregister 1. Mit Hilfe des Ausgangssignals des Sperrschalters 5, 6 können bei Vorliegen von einzelnen Bits E0 bis Em erzwungener Operationen die UND-Tore 30 gesperrt werden, so dass diese an ihren Ausgängen jeweils ein der binären Null entsprechendes Ausgangssignal liefern. Die Steuersignale CSi, die der Operationsdecodierer 3a nun liefert, entstehen ausschliesslich durch Kombination bestimmter Signale, die Instruktionszykluszeiten Ti repräsentieren mit bestimmten Bits Ei der erzwungenen Operationen.

Anstelle der Schaltungsanordnung 5, 6, 30 in Fig. 3 kann auch eine andere Schaltungsanordnung verwendet werden, die, ebenfalls von einem Sperrschalter 5, 6 gesteuert, zur Durchführung einer von einer bestimmten Bedingung ausgelösten erzwungenen Operation das Feld (OP) des Operationscodes im Befehlsregister 1 selbst, oder falls für den Operationscode eines Befehls ein separates Operationsregister vorgesehen ist, dieses auf lauter Nullen einstellt. Der Operationsdecodierer wird auch in diesem Fall den Leerbefehl (NOP) erkennen und nur durch die Bits Ei einer erzwungenen Operation bedingte Steuersignale erzeugen. Bei Verwendung einer derartigen Schaltungsanordnung entfallen dann auch die UND-Tore 30 in Fig. 3.

Die Vereinfachung auf Seiten des Operationsdecodierers 3a der neuen Steuereinrichtung geht im wesentlichen aus Fig. 4 hervor, in der ein Teilelement 7a des Operationsdecodierers 3a dargestellt ist. Ein Vergleich mit dem Teilelement 7 eines bekannten Operationsdecodierers 3 zeigt, dass die UND-Tore 40 bis 43 einen einfacheren Aufbau haben, da sie einen Eingang weniger benötigen als die entsprechenden UND-Tore 20 bis 23 in Fig. 2. Lediglich das UND-Tor 24 hat in beiden Teilelementen 7 und 7a die gleiche Struktur.

Die Einsparungen der einfacheren UND-Tore 40 bis 43 gegenüber den UND-Toren 20 bis 23 ergeben sich aus der einfacheren Struktur dieser Torschaltungen sowie aus der Gesamtverdrahtung des Decodierers 3a, der nun nicht mehr wie der Decodierer 3, mit mehreren Sperrschaltern 5, 6 und wegen der hohen Ausgangsbelastung dieser Schalter durch sehr viele UND-Tore mit so vielen UND-Toren, verbunden werden muss.

**Patentansprüche**

1. Einrichtung im Steuerwerk einer elektronischen Datenverarbeitungsanlage für die Steuerung von durch bestimmte Bedingungen (IC0 bis ICm) erzwungenen Operationen, mit einem Befehlsregister (1; Fig. 3), einem Befehlstaktgeber (2) sowie einem Operationsdecodierer (3a), dadurch gekennzeichnet, dass bei Auftreten einer solchen bestimmten Bedingung anstelle des Operationscodes (OP) des laufenden Befehls sowohl der Operationscode (NOP) des im Befehlssatz der elektronischen Datenverarbeitungsanlage enthaltenen Leerbefehls als auch der Operationscode (E0 bis Em) der einer bestimmten Bedingung zugeordneten erzwungenen Operation an den Operationsdecodierer angelegt werden, so dass dieser keine durch den im Befehlsregister (1) stehenden Befehl bedingte Steuersignale (CS0 bis CSxy), sondern durch die anliegenden Bits (E0 bis Em) des Operationscodes einer erzwungenen Operation bedingte Steuersignale erzeugt.

2. Einrichtung nach Anspruch 1, dadurch gekennzeichnet, dass eine Steuereinrichtung vorgesehen ist, die zur Durchführung der erzwungenen Operationen die Codekombination des laufenden Befehls im Operationscodefeld des Befehlsregisters (1) durch die Codekombination (NOP) des Leerbefehls ersetzt.

**Claims**

1. Arrangement in the control unit of an electronic data processing system for the control of operations forced by particular conditions (IC0 to ICm), comprising an instruction register (1; Fig. 3), an instruction clock generator (2) as well as an operation decoder (3a), characterized in that upon the occurrence of such a particular condition in lieu of the operation code (OP) of the current instruction, the operation decoder receives both the operation code (NOP) of the no operation instruction contained in the instruction set of the electronic data processing system and the operation code (E0 to Em) of a forced operation associated with a particular condition, so that the operation decoder generates control signals in response to the applied bits (E0 to Em) of the operation code of a forced operation rather than control signals (CS0 to CSxy) in response to the instruction contained in the instruction register.

2. Arrangement according to claim 1, characterized in that a control unit is provided which for implementing the forced operations, replaces the code combination of the current instruction in the operation code field of the instruction register (1) by the code combination (NOP) of the no operation instruction.

**Revendications**

1. Dispositif de commande d'une installation de traitement de données, destiné à commander des opérations imposées par des conditions déterminées (IC0 à ICm), avec un registre d'instruction (1; Figure 3), un générateur d'horloge de commande (2) ainsi qu'un décodeur d'opérations (3a), caractérisé en ce que, à l'apparition d'une telle condition déterminée, au lieu du code d'opération (OP) de l'instruction en cours, le code d'opération (NOP) d'une instruction vide de l'ensemble d'instructions de l'installation de traitement de données comme également le code d'opération (E0 à Em) d'une opération imposée, établie par une condition déterminée, est mis en place sur le décodeur d'opérations de sorte que ce dernier ne produit pas les signaux de commande (CS0 à CSxy) provoqués par l'instruction qui résident dans le registre d'instruction (1) mais les signaux de commande provoqués par les bits (E0 à Em) du code d'opération d'une opération imposée.

2. Dispositif selon la revendication 1, caractérisé en ce qu'un dispositif de commande est prévu qui, à l'exécution des opérations voulues, remplace la combinaison codée de l'instruction en cours dans la zone de code d'opérations du registre d'instruction (1) par la combinaison codée (NOP) de l'instruction vide.

EP 0 025 855 B1

FIG. 1

FIG. 2

**FIG. 3**

**FIG. 4**